# EUROPEAN PATENT APPLICATION

(11) **EP 3 674 583 A1**
(43) Date of publication of application: **01.07.2020**
(21) Application number: 19206129.9
(22) Date of filing: 30.10.2019
(51) Int. Cl.: F16H 57/022, F16H 57/12, F16H 1/48, F16H 1/28

(54) **POWER TRANSMISSION DEVICE**

(30) Priority: 28.12.2018 JP 2018246783
(71) Applicant: Exedy Corporation, Neyagawa-shi, Osaka 572-8570 (JP)
(72) Inventor: KATSURA, Hitoshi, Osaka, 572-8570 (JP); KITAMURA, Taichi, Osaka, 572-8570 (JP); BABA, Chika, Osaka, 572-8570 (JP)
(74) Representative: KASTEL Patentanwälte PartG mbB

(57) **Abstract**

It is intended to enable setting an appropriate value for a backlash between gears with a relatively simple mechanism without requiring high accuracy in processing and in assemblage. A power transmission device (1) according to the present invention is a device transmitting a power inputted thereto from a motor (2) to a wheel (3). The power transmission device (1) includes a base member (5), a ring gear (20), a housing (6), a pinion gear (35) and an adjustment mechanism (7). The ring gear (20) is supported by the base member (5), and is rotated about a first axis (C1). The housing (6) is attached to the base member (5). The pinion gear (35) is supported by the housing (6), and is meshed with the ring gear (20). Besides, the pinion gear (35) is rotated about a second axis (C2) that is approachable to and separable from the first axis (C1). The adjustment mechanism (7) adjusts a distance between the first axis (C1) and the second axis (C2).

## Description

### BACKGROUND OF THE INVENTION

### 1. Field of the Invention

The present invention relates to a power transmission device, particularly to a power transmission device that transmits a power, inputted thereto from a power source, to a wheel.

### 2. Description of the Related Art

Electric wheelchairs are provided with, for instance, a power transmission device that is disposed between a motor as a drive source and a wheel so as to transmit a power of the motor to the wheel. For example, Japan Laid-open Patent Application Publication No. 2007-268243 discloses a wheelchair including a drive unit. The drive unit includes a motor and a gearbox (power transmission device).

The gearbox contains a gear for reduction and so forth. Additionally, a gear fixed to an output shaft of the gearbox and a gear fixed to a hub of the wheel are meshed, whereby a power is configured to be transmitted to the wheel through the meshing of gears.

When the motor herein used has a small size, the power transmission device is required to obtain a large reduction ratio in attempt to obtain a desired power (a torque for driving the wheel). In view of this, a gear mechanism including a small diameter gear and a large diameter gear or a planetary gear mechanism capable of obtaining a large reduction ratio (e.g., Japan Laid-open Patent Application Publication No. 2000-210341) is used as the power transmission device.

A device using such a planetary gear mechanism as described in Japan Laid-open Patent Application Publication No. 2000-210341 is composed of a large number of constituent elements, and therefore, requires high cost.

On the other hand, in a device including a gear mechanism other than the planetary gear mechanism (e.g., a gear mechanism working by meshing external gears), an appropriate value is required to be set for a backlash between the tooth surfaces of two gears so as to realize smooth meshing of gears.

Now in a gear mechanism with a large reduction ratio, an output-side gear has a quite larger diameter than an input-side gear. In order to process such a large diameter gear with high accuracy, high processing cost is required. However, processing the large diameter gear with high accuracy is made difficult especially when the large diameter gear is made of resin.

Likewise, in order to assemble the large diameter gear with high accuracy in assemblage of the gear mechanism, high processing cost is required for respective members. Especially, when the small diameter gear and the large diameter gear are supported by different support members, respectively, or when a plurality of constituent elements are interposed between the two gears, accumulation of tolerance makes it difficult to keep a relative positional relation between the both gears with high accuracy.

When accuracy in processing and accuracy in assemblage are deteriorated due to the aforementioned reasons, an appropriate value cannot be set for the backlash between the tooth surfaces of the both gears, whereby smooth meshing cannot be made between the both gears.

### SUMMARY OF THE INVENTION

It is an object of the present invention to provide a power transmission device that an appropriate value can be set for a backlash between gears with a relatively simple mechanism without requiring high accuracy in processing and in assemblage.
(1) A power transmission device according to the present invention is a device transmitting a power inputted thereto from a drive source to a wheel. The present power transmission device includes a first support member, a first gear, a second support member, a second gear and an adjustment mechanism. The first gear is supported by the first support member, and is rotated about a first axis. The second support member is attached to the first support member. The second gear is supported by the second support member, and is meshed with the first gear. Besides, the second gear is rotated about a second axis that is approachable to and separable from the first axis. The adjustment mechanism adjusts a distance between the first axis and the second axis.
   In the present device, the second support member, supporting the second gear, is attached to the first support member supporting the first gear. Thus, two gears meshed with each other are supported by different support members, respectively. Hence, processing tolerance (processing error) and assemblage tolerance (assemblage error) are accumulated, whereby it is difficult to set an appropriate value for a backlash between the both gears.
   In view of this, according to the present invention, the second axis of the second gear is made approachable to and separable from the first axis of the first gear, and simultaneously, the mechanism for adjusting the distance between the two axes is provided. Because of this, even when the processing error and the assemblage error of the respective members become large, an appropriate value can be set for the backlash between the first and second gears by adjusting the distance between the first and second axes. Additionally, it is made easy to realize a gear mechanism having a large reduction ratio with a simple configuration without using a complex mechanism such as a planetary gear mechanism.
(2) Preferably, the first gear is a ring gear including a plurality of internal teeth on an inner peripheral surface thereof. Additionally, the second gear is a pinion gear including a plurality of teeth, meshed with the plurality of internal teeth of the ring gear, on an outer peripheral surface thereof. In this case, it is made easy to set a large reduction ratio.
(3) Preferably, the ring gar is made of resin.
   Generally in order to realize a gear transmission mechanism without intervention of lubricant such as oil, chances are that a gear is obtained by processing a blank made of resin with a method of cutting the circumference of the blank or a method of cutting grooves on the blank. In addition, when the gear is a ring gear having a large diameter, it is made more difficult to process the ring gear with highly accurate dimension.
   However, the distance between axes is herein adjustable. Hence, even when the ring gear is made of resin, the backlash between the pinion gear and the ring gear can be adjusted to an appropriate value.
(4) Preferably, the power transmission device further includes at least one intermediate member disposed between the first support member and the first gear.
   Particularly when the first gear has a large diameter, an intermediate member is often provided as another constituent element between the first support member and the first gear. When such an intermediate member is provided, the assemblage error is further accumulated.
   However, the distance between the first and second axes is herein adjustable. Hence, even when the intermediate member is interposed between the first support member and the first gear, an appropriate value can be set for the backlash between the first and second gears.
(5) Preferably, the power transmission device further includes a third gear and a fourth gear. The third gear is supported by the second support member, and is rotated about a third axis that keeps invariable a distance therefrom to each of the first and second axes. The fourth gear is supported by the second support member, is rotated about the second axis, and is meshed with the third gear.
   Here, the third gear is supported by the second support member by which the second gear is supported. Hence, it is possible to set the distance between the third axis of the third gear and the second axis with relatively high accuracy. Consequently, an appropriate value can be easily set for the backlash between the third and fourth gears. On the other hand, the third gear and the first gear are not being meshed.
   Because of this, the distance from the third axis to each of the first and second axes is invariable, whereby it is not required to adjust the distance therebetween. Consequently, the power transmission device is simplified in structure.
(6) Preferably, the second axis is movable along a trajectory made in shape of a circular arc centered at the third axis. In the configuration herein described, the distance between the second and third axes is invariable, whereas the distance between the first and second axes can be easily made variable.
(7) Preferably, the adjustment mechanism adjusts and fixes a position of the second axis movable on the trajectory made in shape of the circular arc. In this configuration, the adjustment mechanism can be realized with a simple structure.
(8) Preferably, the second support member is a housing that accommodates the second and third gears and is turnable along the trajectory made in shape of the circular arc centered at the third axis. Additionally, the adjustment mechanism adjusts and fixes a turning position of the housing.
(9) Preferably, the first gear overlaps at least in part at an outer diameter thereof with a rim of the wheel as seen in a direction arranged along the first axis.

The outer diameter of the first gear is herein a large diameter, and is approximately equal to that of the rim of the wheel. The present invention is effective in a device including the first gear herein described.

Overall, according to the present invention described above, in a device transmitting a power by meshing at least two gears, a backlash between gears can be appropriately set with a relatively simple mechanism without requiring high accuracy in processing and in assemblage.

### BRIEF DESCRIPTION OF THE DRAWINGS

FIG. 1 is a cross-sectional view of a power transmission device according to a preferred embodiment of the present invention.
FIG. 2 is a front view of the power transmission device shown in FIG. 1.
FIG. 3 is a front view of the power transmission device, from which part of members is detached.
FIG. 4 is a front view of an adjustment mechanism.
FIG. 5 (A, B, C) is a diagram showing an attached state of the power transmission device shown in FIG. 1 in application to an electric wheelchair.

### DETAILED DESCRIPTION OF THE PREFERRED EMBODIMENTS

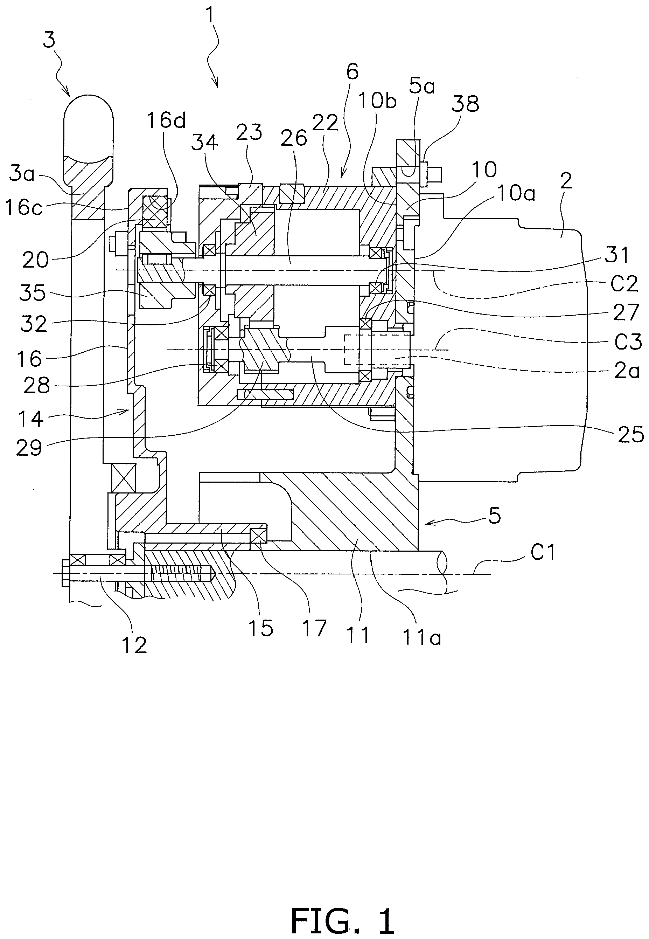

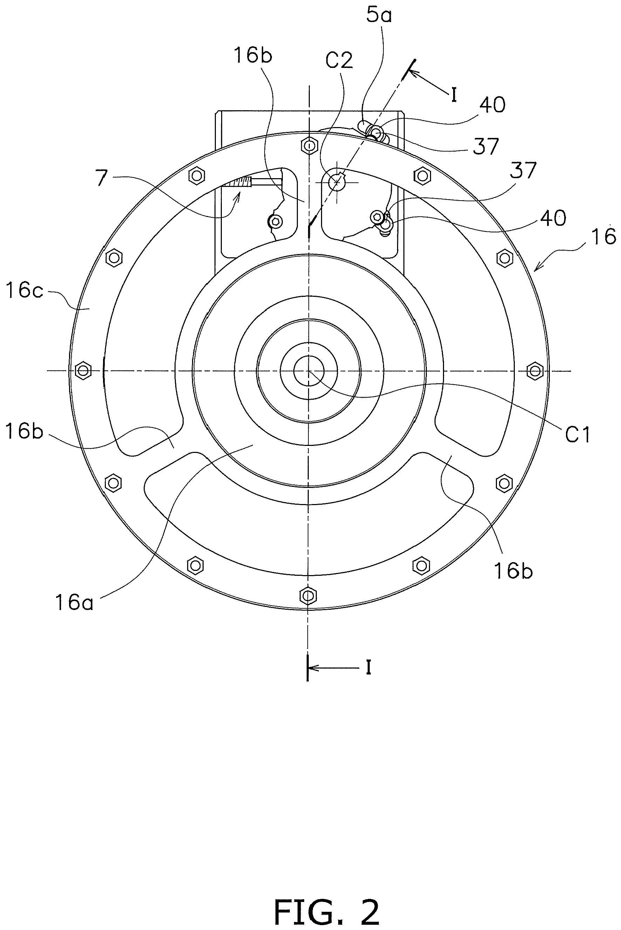

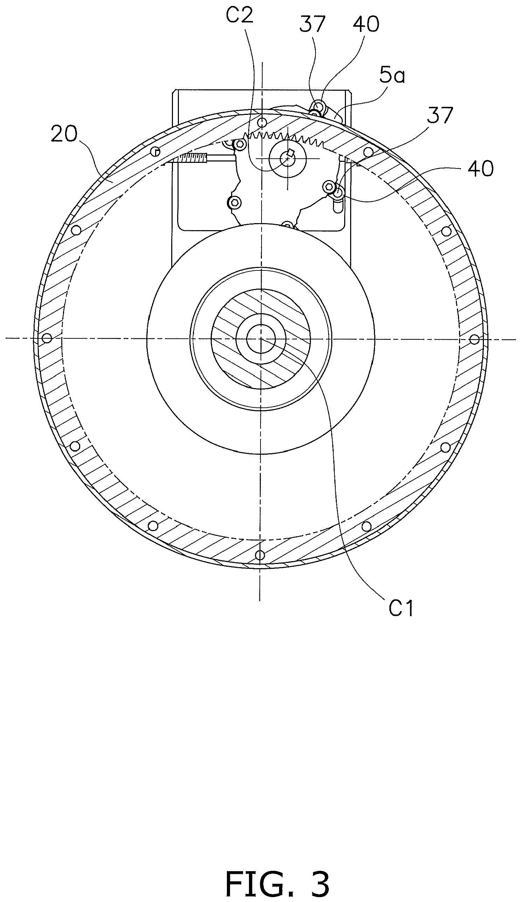

FIGS. 1 and 2 show a power transmission device according to a preferred embodiment of the present invention. FIG. 1 is a cross-sectional view of the power transmission device taken along line I-I in FIG. 2, whereas FIG. 2 is a front view of the power transmission device. Additionally, FIG. 3 is a view of the power transmission device, from which part of members (flange) shown in FIG. 2 is detached.

### [Entire Configuration]

The present power transmission device 1 is a device for transmitting a power, transmitted thereto from a motor 2, to a wheel 3 and is used in, for instance, an electric wheelchair. The power transmission device 1 includes a base member 5 (exemplary first support member), a housing 6 (exemplary second support member) and an adjustment mechanism 7. The housing 6 is capable of adjusting a position of the base member 5 attached to the base member 5 by the adjustment mechanism 7, although this will be explained below in detail.

### [Base Member 5]

The base member 5 includes a motor attached portion 10 and a boss portion 11. The motor 2 is fixed to a first surface 10a (right-side surface in FIG. 1) of the motor attached portion 10, whereas the housing 6 is fixed to a second surface 10b (left-side surface in FIG. 1) of the motor attached portion 10. The boss portion 11 is provided below the motor attached portion 10, and is shaped to axially protrude from the second surface 10b by approximately the same height as the housing 6. The boss portion 11 is provided with a through hole 11a axially penetrating the center part thereof. A hub shaft 12 of the wheel 3 is inserted into the through hole 11a. Additionally, a flange 14 (exemplary intermediate member) is supported by the boss portion 11.

The flange 14 includes a tubular portion 15 and a disc portion 16. The tubular portion 15 is rotatably supported at one end thereof by the boss portion 11 of the base member 5 through a bearing 17. The disc portion 16 is shaped to radially extend from the other end of the tubular portion 15. As shown in FIG. 2, the disc portion 16 includes a middle portion 16a having a circular shape, three arm portions 16b radially extending from the middle portion 16a, and an annular portion 16c connecting the outer peripheries of the arm portions 16b. Additionally, as shown in FIG. 1, the annular portion 16c is provided with a groove 16d having an annular shape on a surface thereof opposed to the base member 5.

A ring gear 20 (exemplary first gear), including a plurality of internal teeth on the inner peripheral surface thereof, is fixed to the groove 16d of the annular portion 16c. The ring gear 20 is rotatable, together with the flange 14, about a center axis C1 (exemplary first axis) of the hub shaft 12. The ring gear 20 is made of resin material. Additionally, as seen in a direction arranged along the hub shaft 12, the ring gear 20 overlaps in part at the pitch circle diameter thereof with a rim 3a of the wheel 3.

### [Housing 6]

The housing 6 includes a body 22, opened on one end side, and a lid portion 23 attached to the opened part of the body 22. The housing 6 accommodates a drive shaft 25 and a counter shaft 25 in the interior thereof.

The drive shaft 25 is rotatably supported at one end portion thereof by the body 22 through a bearing 27. Additionally, an output shaft 2a of the motor 2 is coupled to the one end portion of the drive shaft 25. The drive shaft 25 is rotatably supported at the other end portion thereof by the lid portion 23 through a bearing 28. A drive gear 29 (exemplary third gear), including a plurality of teeth on the outer peripheral surface thereof, is integrated with the drive shaft 25. The drive gear 29 is provided on the other end-side portion of the drive shaft 25. Therefore, the drive gear 29 is rotatable, together with the drive shaft 25, about a center axis C3 (exemplary third axis) of the drive shaft 25.

The counter shaft 26 is disposed in parallel to the drive shaft 25. The counter shaft 26 is rotatably supported at one end portion thereof by the body 22 through a bearing 31. The counter shaft 26 is rotatably supported at the other end portion thereof by the lid portion 23 through a bearing 32. The distal end of the other end portion of the counter shaft 26 passes through the lid portion 23, and protrudes to the outside of the housing 6. Additionally, a counter gear 34 (exemplary fourth gear), including a plurality of teeth on the outer peripheral surface thereof, is fixed to the other end-side portion of the counter shaft 26. The counter gear 34 is meshed with the drive gear 29.

Additionally, a pinion gear 35, including a plurality of teeth on the outer peripheral surface thereof, is fixed to the distal end of the other end-side portion of the counter shaft 26, i.e., the portion protruding from the housing 6. Thus, the pinion gear 35 is rotatable, together with the counter gear 34, about a center axis C2 (exemplary second axis) of the counter shaft 26. Additionally, the pinion gear 35 is meshed with the ring gear 20.

### [Attachment of the Housing 6 to the Base Member 5]

The housing 6 is attached to the base member 5 by a plurality of bolts 37 and a plurality of nuts 38. In more detail, a plurality of attachment portions 40, each provided with a through hole penetrating therethrough, are fixed to the outer periphery of the housing 6. On the other hand, the base member 5 is also provided with a plurality of through holes 5a in corresponding positions to the plurality of attachment portions 40. Thus, the housing 6 is fixed to the base member 5 by the bolts 37, which penetrate the through holes of the attachment portions 40 and the through holes 5a of the base member 5, respectively, and the nuts 38 that are screwed onto the bolts 37, respectively.

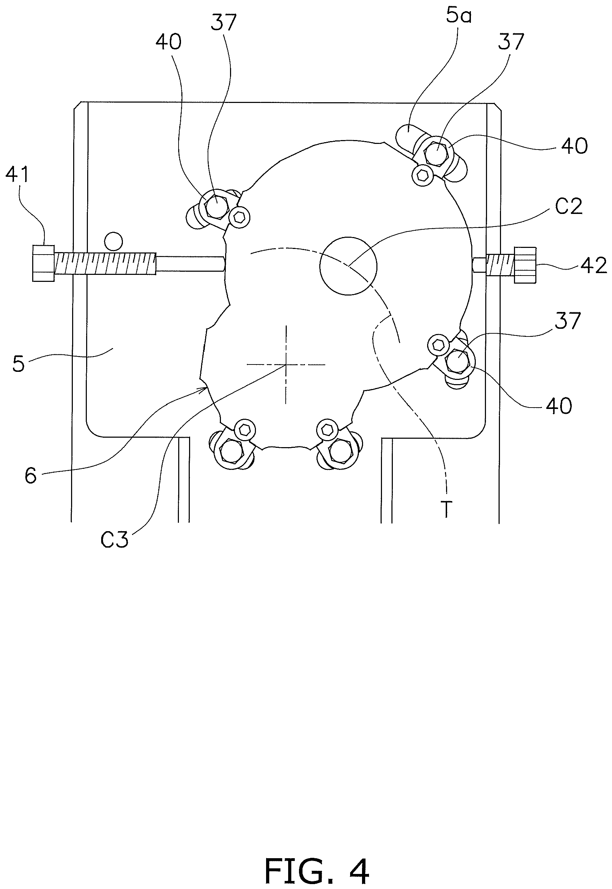

Now, as shown in FIG. 4, in a phase before fixation of the housing 6 to the base member 5, the housing 6 is turnable along a trajectory T made in shape of a circular arc centered at the center axis C3 of the drive shaft 25. Therefore, the plural through holes 5a of the base member 5 are elongated through holes, each of which is elongated in a predetermined direction so as to make the housing 6 movable along the trajectory T.

In the configuration described above, moving the housing 6 along the trajectory T enables change in distance between the center axis C1 of the hub shaft 12 (i.e., the rotational axis of the ring gear 20) and the center axis C2 of the counter shaft 26 (i.e., the rotational axis of the pinion gear 35) without changing distance between the center axis C3 of the drive shaft 25 and the center axis C2 of the counter shaft 26. Accordingly, a backlash can be adjusted between the ring gear 20 and the pinion gear 35.

### [Adjustment Mechanism 7]

As shown in FIG. 4, the adjustment mechanism 7 includes a first screw 41, making contact at the distal end thereof with one outer lateral surface of the housing 6, and a second screw 42 making contact at the distal end thereof with the other outer lateral surface of the housing 6. The first screw 41 is screwed into one wall of the base member 5, whereas the second screw 42 is screwed into the other wall of the base member 5. Therefore, the housing 6 can be moved along the trajectory T by loosening one of the first and second screws 41 and 42 and tightening the other thereof. Then, after adjustment, the position of the housing 6 is fixed by the bolts 37 and the nuts 38.

### [Action]

A power, transmitted from the motor 2, is inputted to the drive shaft 25, and is transmitted therefrom to the counter shaft 26 through meshing between the drive gear 29 and the counter gear 34. Then, the power, transmitted to the counter shaft 26, is transmitted from the flange 14 to the wheel 3 through meshing between the pinion gear 35, fixed to the counter shaft 26, and the ring gear 20.

### [Adjustment of Distance between Axes]

Now, the flange 14, to which the ring gear 20 is attached, is supported by the base member 5, whereas the counter shaft 26, to which the pinion gear 35 is attached, is supported by the housing 6. In other words, the ring gear 20 and the pinion gear 35 are supported by different members, respectively. Besides, the ring gear 20 is supported by the base member 5 through the flange 14. Furthermore, it is difficult to process the ring gear 20 with high accuracy, because the ring gear 20 is formed by resin molding. Therefore, it is difficult to manage, with high accuracy, a positional relation between the ring gear 20 and the pinion gear 35.

In view of this, as described above, the adjustment mechanism 7 is herein configured to be capable of adjusting the distance between the rotational center of the ring gear 20 and that of the pinion gear 35. With this adjustment, a backlash can be appropriately adjusted between the ring gear 20 and the pinion gear 35.

Because of this, even when processing errors and assemblage errors of the respective members are accumulated, the ring gear 20 and the pinion gear 35 can be smoothly meshed.

### [Application Example]

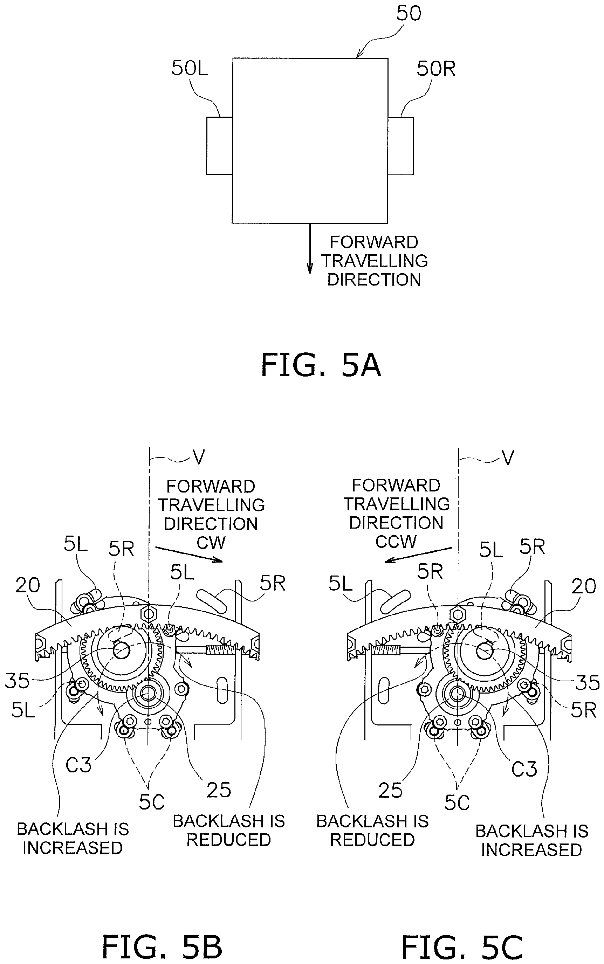

FIG. 5 shows an exemplary configuration that the power transmission device 1 according to the present preferred embodiment is applied to an electric wheelchair 50. Diagram (a) of FIG. 5 schematically shows the electric wheelchair 50 and drive units thereof. The motor 2 and the power transmission device 1, both of which are shown in FIG. 1 and so forth, are installed in each of left-side and right-side drive units 50L and 50R.

When the power transmission device 1 according to the present preferred embodiment is herein used as each of the left-side and right-side drive units 50L and 50R for the electric wheelchair 50, the base member 5 is provided with not only attachment through holes 5c common to the left-side and right-side drive units 50L and 50R but also elongated through holes 5L exclusive for the left-side drive unit 50L and elongated through holes 5R exclusive for the right-side drive unit 5R. The elongated through holes 5L exclusive for the left-side drive unit 50L and the elongated through holes 5R exclusive for the right-side drive unit 50R are provided in line symmetric positions with respect to a vertical line V passing through the center axis C3 of the drive shaft 25.

First, in the left-side drive unit 50L, the housing 6 is attached to the base member 5 in a left-side postural position shown in diagram (b) of FIG. 5 with use of the common through holes 5c and the elongated through holes 5L exclusive for the left-side drive unit 50L. On the other hand, in the right-side drive unit 50R, the housing 6 is attached to the base member 5 in a right-side postural position shown in diagram (c) of FIG. 5, which is line symmetric to the left-side postural position with respect to the vertical line V, with use of the common through holes 5c and the elongated through holes 5R exclusive for the right-side drive unit 50R.

Now as shown in diagram (b) of FIG. 5, in the left-side drive unit 50L, the ring gear 20 including the wheel 3 is rotated in a direction depicted with arrow CW in forward travelling. On the other hand, as shown in diagram (c) of FIG. 5, in the right-side drive unit 50R, the ring gear 20 including the wheel 3 is rotated in a direction depicted with arrow CCW in forward travelling.

Here in the left-side drive unit 50L, the housing 6 is attached to the base member 5 in the left-side postural position, whereby the pinion gear 35 receives a force directed to increase a backlash between the pinion gear 35 and the ring gear 20. On the other hand, in the right-side drive unit 50R, the housing 6 is attached to the base member 5 in the right-side postural position, whereby the pinion gear 35 similarly receives a force directed to increase a backlash between the pinion gear 35 and the ring gear 20.

Therefore, in the left-side and right-side drive units 50L and 50R, the backlash between the ring gear 20 and the pinion gear 35 is reduced, whereby the teeth of the both gears 20 and 35 can be prevented from getting stuck with each other. Because of this, in transmitting a power, the power can be smoothly transmitted between the both gears.

### [Other Preferred Embodiments]

The present invention is not limited to the preferred embodiment described above, and a variety of changes or modifications can be made without departing from the scope of the present invention.
(a) In the aforementioned preferred embodiment, the present invention has been applied to meshing between the ring gear with internal teeth and the pinion gear. However, the present invention is similarly applicable to meshing between gears with external teeth as well.
(b) In the aforementioned preferred embodiment, the present invention has been applied to the power transmission device with a three-axis configuration. However, the present invention is similarly applicable to a power transmission device with a two-axis configuration as well.
(c) The structure for supporting the ring gear is not limited to that in the aforementioned preferred embodiment. For example, the ring gear may be configured to be directly fixed to the hub shaft.

### REFERENCE SIGNS LIST

- 1: Power transmission device
- 2: Motor (drive source)
- 3: Wheel
- 3a: Rim
- 5: Base member (first support member)
- 6: Housing (second support member)
- 7: Adjustment mechanism
- 14: Flange (intermediate member)
- 20: Ring gear (First gear)
- 29: Drive gear (third gear)
- 34: Counter gear (fourth gear)
- 35: Pinion gear (second gear)

## Claims

1. A power transmission device transmitting a power inputted thereto from a drive source to a wheel, the power transmission device comprising:
a first support member;
a first gear supported by the first support member, the first gear being rotated about a first axis;
a second support member attached to the first support member;
a second gear supported by the second support member, the second gear being meshed with the first gear, the second gear being rotated about a second axis, the second axis being approachable to and separable from the first axis; and
an adjustment mechanism adjusting a distance between the first axis and the second axis.

2. The power transmission device according to claim 1, wherein
the first gear is a ring gear including a plurality of internal teeth on an inner peripheral surface thereof, and
the second gear is a pinion gear including a plurality of teeth on an outer peripheral surface thereof, the plurality of teeth being meshed with the plurality of internal teeth of the ring gear.

3. The power transmission device according to claim 2, wherein the ring gar is made of resin.

4. The power transmission device according to any of claims 1 to 3, further comprising:
at least one intermediate member disposed between the first support member and the first gear.

5. The power transmission device according to any of claims 1 to 4, further comprising:
a third gear supported by the second support member, the third gear being rotated about a third axis, the third axis keeping invariable a distance therefrom to each of the first and second axes; and
a fourth gear supported by the second support member, the fourth gear being rotated about the second axis, the fourth gear being meshed with the third gear.

6. The power transmission device according to claim 5, wherein the second axis is movable along a trajectory made in shape of a circular arc centered at the third axis.

7. The power transmission device according to claim 6, wherein the adjustment mechanism adjusts and fixes a position of the second axis movable on the trajectory made in shape of the circular arc.

8. The power transmission device according to claim 7, wherein
the second support member is a housing accommodating the second and third gears, the housing being turnable along the trajectory made in shape of the circular arc centered at the third axis, and
the adjustment mechanism adjusts and fixes a turning position of the housing.

9. The power transmission device according to any of claims 1 to 8, wherein the first gear overlaps at least in part at an outer diameter thereof with a rim of the wheel as seen in a direction arranged along the first axis.
